# FASCICULE DE BREVET EUROPEEN

(11) **EP 2 780 508 B1**
(45) Date de publication et mention de la délivrance du brevet: **16.12.2015**
(21) Numéro de dépôt: 12779121.8
(22) Date de dépôt: 08.10.2012
(51) Int. Cl.: D21H 19/58, B41M 5/52, D21H 17/66

(54) **POLYMÈRES FAIBLEMENT ANIONIQUES POUR SAUCES DE COUCHAGE DESTINÉES À DES PAPIERS POUR IMPRESSION DE TYPE JET D'ENCRE.**
LEICHT ANIONISCHE POLYMERE FÜR STREICHMASSEN FÜR TINTENSTRAHLDRUCKPAPIER
SLIGHTLY ANIONIC POLYMERS FOR COATING SLIPS INTENDED FOR INK-JET PRINTING PAPER

(30) Priorité: 18.11.2011 FR 1103520
(43) Date de publication de la demande: 24.09.2014
(73) Titulaire: COATEX, 69730 Genay (FR)
(72) Inventeur: GUILLOT, Murielle, F-59118 Wambrechies (FR); GUERRET, Olivier, F-46170 Pern (FR); DUPONT, François, F-69004 Lyon (FR)
(74) Mandataire: Fiorucci, Hélène
(86) Numéro de dépôt international: PCT/FR2012/052272
(87) Numéro de publication internationale: WO 2013/072586

(56) Documents cités:
- WO-A1-99/41086
- FR-A1- 2 810 261
- FR-A1- 2 950 061

## Description

Dans les sauces de couchage destinées à une impression de type jet d'encre, il est nécessaire d'introduire des sels ou des espèces cationiques pour fixer les gouttelettes d'encre à la surface du papier support. Néanmoins, ces produits utilisés en quantité importante peuvent déstabiliser le milieu. La présente invention consiste à mettre en oeuvre certains additifs rhéologiques qui permettent à la fois de réguler la viscosité du milieu de façon à éviter tout problème de déstabilisation, et qui permettent en plus d'améliorer avantageusement la rétention d'eau de la sauce.

La technique d'impression par jet d'encre permet une impression d'un papier support au moyen de gouttelettes d'encre. Ces dernières sont éjectées ou propulsées à partir de différents moyens mécaniques vers un support papier, sur lequel elles forment des points qui créent le texte ou l'image correspondant.

Les qualités intrinsèques de cette technologie expliquent son développement rapide : une possibilité d'impression à haute vitesse, sans contact et sans impact, avec une haute définition, donnant ainsi accès à des images couleur de qualité. Indépendamment, les progrès réalisés en électronique et en informatique contribuent à l'amélioration constante des ordinateurs et des appareils photo digitaux ; cette évolution des matériels, couplée au faible prix d'achat des imprimantes par jet d'encre, conduit de plus en plus d'utilisateurs vers cette technologie d'impression. Aujourd'hui, cette technologie est utilisée aussi bien par les professionnels que par le grand public pour imprimer des objets aussi divers que des lettres, des rapports, des brochures, des magazines, des cartes postales, des photographies digitales, des étiquettes, des posters,...

A ce jour, on considère qu'il existe 2 familles de support pour jet d'encre : les papiers « ordinaires » et les papiers « spéciaux ». Les premiers sont mis en oeuvre pour des impressions de qualité faible à moyenne, à moindre coût. Les seconds sont préconisés lorsqu'on attend un rendu élevé de l'image ou du texte à imprimer, et sont obtenus à des coûts plus élevés. La différence majeure entre ces 2 catégories réside dans l'application d'un revêtement à base aqueuse à la surface du support :
- de faible dépose et avec des composés organiques et minéraux peu coûteux dans le cas des papiers ordinaires ;
- de dépose plus élevée et avec des composés organiques ou minéraux plus élaborés et coûteux dans le cas des papiers spéciaux.

Ce revêtement est dénommé « sauce de couchage » : il s'agit d'une formulation aqueuse contenant classiquement de l'eau, au moins une charge minérale, un ou plusieurs liants ainsi que divers additifs. Dans les sauces de couchage destinées aux impressions du type jet d'encre, on peut introduire soit des sels minéraux ou organiques, soit des espèces cationiques, dont la fonction première est de fixer l'encre au moment où celle-ci parvient à la surface du papier sous forme de gouttelettes. Les documents WO 2009 / 110910, WO 2010 / 068193 et WO 2011 / 008218 donnent des exemples de telles formulations contenant des sels alors que le document WO 2007 / 112013 concerne des sauces de couchage contenant des espèces cationiques, l'ensemble de ces documents se rapportant à la technologie jet d'encre.

La charge minérale introduite dans la sauce de couchage est véhiculée sous forme d'une suspension aqueuse. Classiquement, cette charge est un carbonate de calcium mis en suspension dans l'eau au moyen d'un agent dispersant.

Les agents dispersants les plus répandus sont des polymères anioniques de faibles poids moléculaires (inférieurs à 10 000 g/mol) qui sont des homopolymères de l'acide acrylique. On pourra citer à cet égard les demandes de brevet FR 2 488 814, FR 2 603 042, EP 0 100 947, EP 0 100 948, EP 0 129 329, EP 0 542 643 et EP 0 542 644. Mais on peut aussi utiliser des dispersants faiblement anioniques, qui sont des copolymères de bas poids moléculaires de l'acide acrylique avec un monomère du type méthoxy ou hydroxy oxyalkylé ; on en trouvera des exemples dans le document WO 01/096007.

Ceci étant, lorsqu'on réalise la formulation de la sauce de couchage par mélange entre les différents constituants énumérés plus haut, l'introduction du sel ou du composé cationique peut engendrer un problème lors de l'introduction supplémentaire d'un agent de rhéologie dont la fonction est de réguler la viscosité et d'améliorer la rétention d'eau de ladite sauce. Ces deux paramètres contribuant à la maîtrise du procédé de couchage, à la qualité de l'étalement sur le papier support et au maintient des composés actifs de la sauce de couchage à la surface du papier.

Or les agents de rhéologie classiques sont des polymères généralement anioniques dont il a été observé que leur introduction dans les sauces pour jet d'encre contenant des sels ou un composé cationique provoque une violente réaction de floculation, traduite par une forte hausse de la viscosité, sans amélioration notable de la rétention d'eau.

La Demanderesse a mis au point l'utilisation d'additifs polymères faiblement anioniques dans ces sauces de couchage, additifs qui, de manière surprenante, apportent la fonction d'épaississement recherchée tout en améliorant très sensiblement la rétention d'eau.

Ces additifs sont des polymères hydrosolubles caractérisés en ce qu'ils sont constitués de, exprimés en % en poids de chacun de leurs monomères :
a) 5 % à 40 %, préférentiellement 5 % à 20 % d'acide (méth)acrylique,
b) 60 % à 95 %, préférentiellement 80 % à 95 % d'au moins un monomère de formule (I) :

   R - (OE)ₘ - (OP)ₙ - R' (I)

   où R est une fonction polymérisable choisie parmi la fonction méthacrylate et méthacryluréthanne, OE et OP désignent respectivement les oxydes d'éthylène et de propylène, m et n sont 2 entiers dont l'un au moins est non nul et sont compris au sens large entre 0 et 100, R' désigne l'hydrogène ou un groupe alkyle ayant de 1 à 4 atomes de carbone.

Aussi, un premier objet de la présente invention consiste en un procédé de fabrication d'une sauce de couchage destinée à un papier pour impression jet d'encre, comprenant les étapes consistant à :
1) mélanger une suspension aqueuse d'une charge minérale contenant un agent dispersant, avec au moins un liant,
2) introduire dans le milieu au moins un sel organique ou un sel minéral ou au moins un composé cationique, et
3) introduire dans le milieu au moins un polymère hydrosoluble constitué de, exprimé en % en poids de chacun de ses monomères :
   a) 5 % à 40 %, préférentiellement 5 % à 20 % d'acide (méth)acrylique,
   b) 60 % à 95 %, préférentiellement 80 % à 95 % d'au moins un monomère de formule (I) :

      R - (OE)ₘ - (OP)ₙ - R' (I)

      où R est une fonction polymérisable choisie parmi la fonction méthacrylate et méthacryluréthanne, OE et OP désignent respectivement les oxydes d'éthylène et de propylène disposés de manière régulière ou de manière aléatoire, m et n sont 2 entiers dont l'un au moins est non nul et sont compris au sens large entre 0 et 100, R' désigne l'hydrogène ou un groupe alkyle ayant de 1 à 4 atomes de carbone,

Un deuxième objet de la présente invention réside dans l'utilisation, comme agent de stabilisation d'une sauce de couchage destinée à un papier pour impression jet d'encre, contenant de l'eau, au moins une charge minérale en suspension aqueuse en présence d'un agent dispersant, au moins un liant, au moins un sel minéral ou organique ou un composé cationique, d'au moins un polymère hydrosoluble constitué de, exprimé en % en poids de chacun de ses monomères :
a) 5 % à 40 %, préférentiellement 5 % à 20 % d'acide (méth)acrylique,
b) 60 % à 95 %, préférentiellement 80 % à 95 % d'au moins un monomère de formule (I) :

   R-(OE)ₘ-(OP)ₙ-R' (I)

   où R est une fonction polymérisable choisie parmi la fonction méthacrylate et méthacryluréthanne, OE et OP désignent respectivement les oxydes d'éthylène et de propylène, m et n sont 2 entiers dont l'un au moins est non nul et sont compris au sens large entre 0 et 100, R' désigne l'hydrogène ou un groupe alkyle ayant de 1 à 4 atomes de carbone.

Un troisième objet de la présente invention réside dans une sauce de couchage destinée à un papier pour impression jet d'encre, contenant de l'eau, au moins une charge minérale en suspension aqueuse en présence d'un agent dispersant, au moins un liant, au moins un sel minéral ou un sel organique ou un composé cationique, et au moins un polymère hydrosoluble constitué de, exprimé en % en poids de chacun de ses monomères :
a) 5 % à 40 %, préférentiellement 5 % à 20 % d'acide (méth)acrylique,
b) 60 % à 95 %, préférentiellement 80 % à 95 % d'au moins un monomère de formule (I) :

   R-(OE)ₘ-(OP)ₙ-R' (I)

   où R est une fonction polymérisable choisie parmi la fonction méthacrylate et méthacryluréthanne, OE et OP désignent respectivement les oxydes d'éthylène et de propylène, m et n sont 2 entiers dont l'un au moins est non nul et sont compris au sens large entre 0 et 100, R' désigne l'hydrogène ou un groupe alkyle ayant de 1 à 4 atomes de carbone.

Dans chacun des 3 objets constituant l'invention, selon un mode de réalisation de la présente invention, le polymère hydrosoluble dont il est question est totalement ou partiellement neutralisé.

Selon un autre mode de réalisation, sa masse moléculaire en poids, telle que déterminée par GPC, est comprise entre 10 000 g/mol et 10 000 000 g/mol. Dans une première variante de réalisation, on met en oeuvre des polymères dits de « basse masse moléculaire » comprise entre 10 000 g/mol et 100 000 g/mol. Dans une seconde variante de réalisation, on utilise des polymères de « haute masse moléculaire » comprise entre 1 000 000 g/mol et 10 000 000 g/mol.

Par « sel », on entend une substance qui se présente sous forme ionique composée de cations et d'anions formant un produit neutre sans charge neutre. Les sels minéraux proviennent classiquement de roches ; les sels organiques contiennent du carbone, de l'hydrogène et de l'oxygène. Des exemples de sels minéraux sont le chlorure de calcium, le chlorure de magnésium, le chlorure de sodium, le chlorure de potassium, le bromure de calcium, le sulfate de sodium ou des mélanges de ces sels. Des exemples de sels organiques sont l'acétate de sodium, l'acétate de potassium, le citrate de sodium, le citrate de calcium ou des mélanges de ces sels.

Dans chacun des 3 objets constituant l'invention, selon un mode de réalisation de l'invention, la sauce de couchage contient au moins un sel minéral qui est le chlorure de calcium.

Par « composé cationique » selon la présente invention, on entend un composé présentant une charge positive et ayant pour fonction de fixer l'encre à la surface du papier.

Dans chacun des 3 objets constituant l'invention, selon un autre mode de réalisation de l'invention, la sauce de couchage contient un composé cationique qui est choisi parmi les polydadmac, polymadquat ou polyamine.

Par « liant », on entend un composé ayant la fonction de coller les particules de charge minérale (ou pigments) entre elles et de maintenir la couche à la surface du papier. A titre d'exemples de liants selon la présente invention, on peut citer les liants hydrosolubles tels que la CMC, la PVOH, l'amidon et/ou les latex synthétiques (styrene-butadiéne, styrene-acrylique, acétate de polyvinyl).

Par « agent dispersant », on entend un agent ayant la fonction de maintenir les particules de charge minérale en état de dispersion électrostatique. A titre d'exemple, il s'agit de polyacrylates ou de polyphosphates.

Dans chacun des 3 objets constituant l'invention, selon un mode de réalisation, la charge minérale est choisie parmi un carbonate de calcium naturel, synthétique ou modifié chimiquement. Selon un mode de réalisation, la charge minérale est un carbonate de calcium naturel.

Le terme « carbonate de calcium » comprend le carbonate de calcium broyé (GCC), c'est-à-dire un carbonate de calcium obtenu à partir de sources naturelles, telles que le calcaire, le marbre, la calcite ou la chaux, ainsi que le carbonate de calcium précipité (PCC), c'est-à-dire une substance synthétisée, généralement obtenue par précipitation suite à une réaction de dioxyde de carbone et d'hydroxyde de calcium (chaux hydratée) dans un environnement aqueux ou par précipitation d'une source de calcium et de carbonate dans de l'eau.

Par « carbonate de calcium modifié chimiquement », on entend un carbonate dont au moins une des propriétés de surface a été modifiée par un traitement à partir d'un agent chimique.

Les suspensions auqueuses de carbonate de calcium sont des suspensions de solides insolubles dans un milieu liquide qui est généralement un mélange d'eau et d'au moins un additif.

Dans chacun des 3 objets constituant l'invention, selon un mode de réalisation de l'invention le dispersant est choisi parmi un dispersant anionique ou cationique.

Dans chacun de ses 3 objets qui constituent la présente invention, il est évidemment entendu que l'homme du métier pourra ajouter dans la sauce de couchage tous les additifs qu'il jugera nécessaires, choisis de manière non exhaustive parmi les azurants optiques, les anti-mousses et les biocides.

### EXEMPLES

### Exemple 1

Cet exemple illustre la fabrication d'une sauce de couchage destinée à un papier pour impression jet d'encre, ladite sauce contenant un composé cationique. Cet exemple illustre les effets de différents additifs polymériques mis en oeuvre, sur la rhéologie de ladite sauce ainsi que sur sa rétention d'eau.

Dans chacun des essais n° 1 à 15, on réalise une sauce de couchage par mélange préalable entre une suspension aqueuse de carbonate de calcium, dispersée anioniquement, et commercialisée par la société Omya sous le nom d'Omyajet ™ 5020 Me.

On ajoute un polymère cationique commercialisé par la société Coatex™ sous le nom de Topsperse™ 67 K, dans une quantité égale à 7,5 parts en poids sec pour 100 parts en poids sec de carbonate de calcium.

On ajoute ensuite un liant qui est du polyacétate de vinyle commercialisé par la société Celanese sous la dénomination Resyn™ 1190 de manière à avoir 10 parts en poids sec de liant pour 100 parts en poids sec de carbonate de calcium.

On introduit enfin dans la sauce l'additif polymérique à tester ; la quantité utilisée de même que sa composition sont données plus avant.

Les sauces sont réalisées avec un extrait sec de 45,5% et ont un pH ajusté à 8,5.

Pour chaque sauce, on détermine alors sa viscosité Brookfield™ à 25°C et à 100 tours par minute selon la technique bien connue de l'homme du métier, de même que la valeur de sa rétention d'eau, déterminée selon le protocole ci-après.

La rétention d'eau est déterminée grâce à un appareil du type AAGWR commercialisé par la société GRADEK™. Cet appareil est constitué d'une chambre de mesure dans laquelle on dispose un papier test dénommé "Test Blotter Paper", recouvert par une toile plastique perforée dénommée "Test Filter PCTE", le papier et la toile étant commercialisés par la société GRADEK™. La taille des perforations est de 2 µm.

On introduit ensuite dans la chambre 10 ml de la sauce de couchage à tester.

L'appareil AAGWR permet d'exercer une certaine pression sur la sauce de couchage, conduisant tout ou partie de l'eau et des substances hydrosolubles contenues dans la sauce à traverser la toile plastique perforée et à migrer dans le papier test. Concrètement, on applique une pression de 1,5 bar pendant 90 secondes.

La différence entre le poids du papier test avant l'expérience P₀, et après l'expérience P₁, donne le poids d'eau et des substances hydrosolubles contenues dans sauce de couchage et qui ont migré dans le papier test au cours de l'expérience.

La différence entre le poids du papier test avant l'expérience P₀, et après l'expérience P₁, donne le poids d'eau et des substances hydrosolubles contenues dans sauce de couchage et qui ont migré dans le papier test au cours de l'expérience.

A cette différence P₁- P₀ est appliqué un facteur de correction ramenant la valeur de rétention d'eau au m² de papier test.

A des valeurs plus élevées correspondent des rétentions d'eau moins bonnes.

### Essai n° 1

Cet essai sert de référence et ne met pas en oeuvre d'additif polymérique

### Essai n° 2

Cet essai illustre l'art antérieur et met en oeuvre 0,6 part en poids sec d'un agent de rhéologie fréquemment utilisé dans les sauces de couchage : une carboxy méthyl cellulose commercialisée par la société BASF™ sous le nom Finnfix™ 10.

### Essai n° 3

Cet essai illustre l'art antérieur et met en oeuvre 1,2 parts en poids sec de Finnfix™ 10.

### Essai n° 4

Cet essai illustre l'art antérieur et met en oeuvre 0,6 part en poids sec d'un agent de rhéologie fréquemment utilisé dans les sauces de couchage : il s'agit d'une autre carboxy méthyl cellulose commercialisée par la société BASF™ sous le nom Finnfix™ 30.

### Essai n° 5

Cet essai illustre l'art antérieur et met en oeuvre 1,2 parts en poids sec de Finnfix™ 30

### Essai n° 6

Cet essai illustre l'art antérieur et met en oeuvre 0,6 part en poids sec d'un agent de rhéologie fréquemment utilisé dans les sauces de couchage : il s'agit d'une émulsion aqueuse d'un polymère acrylique commercialisé par la société Coatex™ sous le nom Rheocoat™ 66.

### Essai n° 7

Cet essai illustre l'art antérieur et met en oeuvre 1,2 parts en poids sec de Rheocoat™ 66.

### Essai n° 8

Cet essai illustre l'art antérieur et met en oeuvre 0,6 part en poids sec d'un agent de rhéologie fréquemment utilisé dans les sauces de couchage : il s'agit d'une émulsion aqueuse d'un polymère acrylique associatif commercialisé par la société Coatex™ sous le nom Rheocoat™ 73.

### Essai n° 9

Cet essai illustre l'art antérieur et met en oeuvre 1,2 parts en poids sec de Rheocoat™ 73.

### Essai n° 10

Cet essai illustre l'invention et met en oeuvre 0,8 part en poids sec d'un copolymère constitué de, exprimé en % en poids de chacun de ses monomères :
a) 8 % d'acide acrylique, 2,5 % d'acide méthacrylique,
b) 89,5 % d'un monomère de formule (I) :

   R - (OE)ₘ - (OP)ₙ - R' (I)

   où R est la fonction méthacrylate, OE et OP désignent respectivement les oxydes d'éthylène et de propylène, n = 48 et m = 16, R' désigne l'hydrogène
de masse moléculaire moyenne en poids, déterminé par GPC, égale à 1 800 000 g/mol.

### Essai n° 11

Cet essai illustre l'invention et met en oeuvre 1,2 parts en poids sec du copolymère selon l'essai n° 10.

### Essai n° 12

Cet essai illustre l'invention et met en oeuvre 0,8 parts en poids sec d'un copolymère constitué de, exprimé en % en poids de chacun de ses monomères :
a) 6 % d'acide acrylique, 1,8 % d'acide méthacrylique,
b) 92,2 % d'un monomère de formule (I) :

   R-(OE)ₘ-(OP)ₙ-R' (I)

   où R est la fonction méthacrylate, OE et OP désignent respectivement les oxydes d'éthylène et de propylène, n = 0 et m = 45, R' désigne le radical méthyle.
de masse moléculaire moyenne en poids, déterminé par GPC, égale à 5 000 000 g/mol.

### Essai n° 13

Cet essai illustre l'invention et met en oeuvre 1,2 parts en poids sec du copolymère selon l'essai n° 12.

### Essai n° 14

Cet essai illustre l'invention et met en oeuvre 0,8 part en poids sec du copolymère selon l'essai n° 10, mais de masse moléculaire moyenne en poids égale à 4 200 000 g/mol.

### Essai n° 15

Cet essai illustre l'invention et met en oeuvre 1,2 parts en poids sec du copolymère selon l'essai n° 14

Les valeurs de la viscosité Brookfield™ (Bk en mPa.s) et de la rétention d'eau (AA GWR en %) ont été reportées dans le tableau 1, de même que la quantité en parts en poids sec de l'additif polymérique testé (parts).

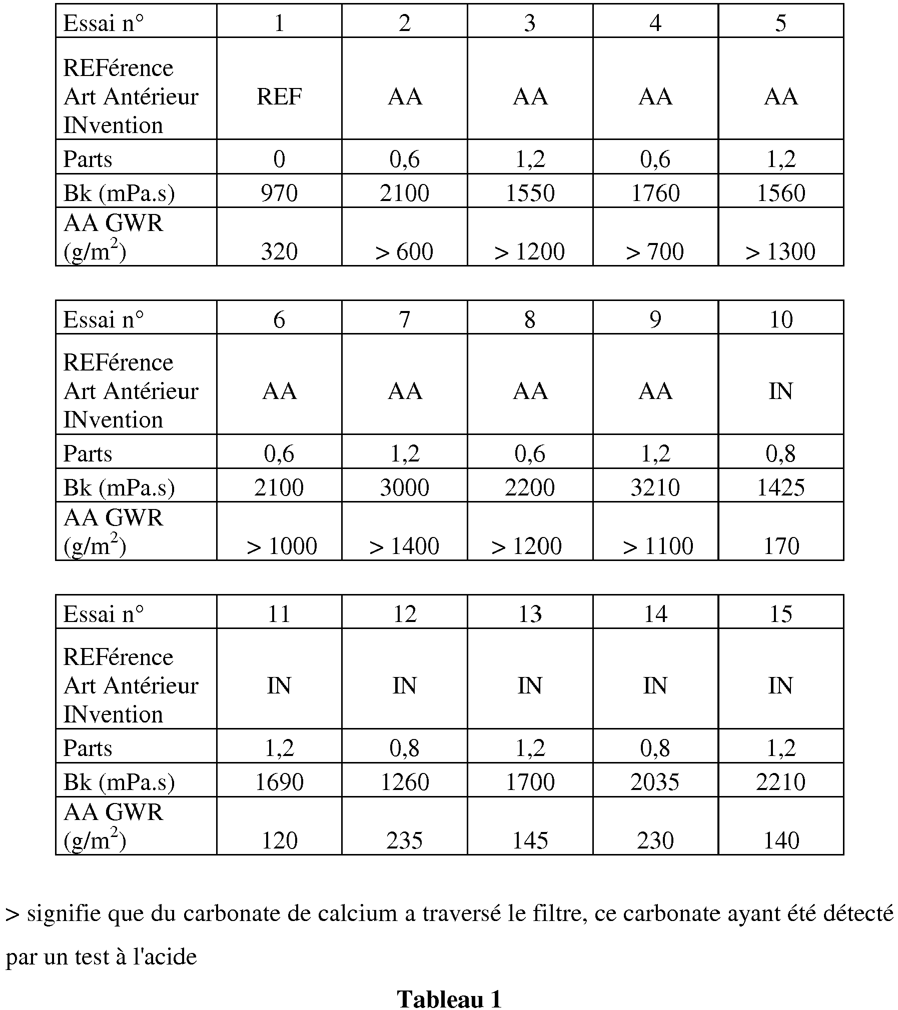

Seuls les polymères selon l'invention conduisent à des valeurs de rétention d'eau largement inférieures à celles obtenues pour la référence et l'art antérieur et ce, pour des valeurs de viscosité Brookfield™ tout à fait acceptables.

### Exemple 2

Cet exemple illustre la fabrication d'une sauce de couchage destinée à un papier pour impression jet d'encre, ladite sauce contenant un sel. Cet exemple illustre les effets de différents additifs polymériques mis en oeuvre, sur la rhéologie de ladite sauce ainsi que sur sa rétention d'eau.

Dans chacun des essais n° 16 à 20, on réalise une sauce de couchage par mélange d'une suspension aqueuse à 78 % en poids sec de carbonate de calcium, contenant un dispersant anionique et commercialisé par la société Omya™ sous la dénomination Hydrocarb™ 90 et de 10 parts en poids sec de chlorure de calcium.

On introduit ensuite le liant Resyn™ 1190. Le mélange est réalisé de manière à avoir 100 parts en poids sec de carbonate de calcium pour 10 parts en poids sec de liant.

On introduit ensuite dans la sauce l'additif polymérique à tester ; la quantité utilisée de même que sa composition sont données plus avant.

Les sauces sont réalisées avec un extrait sec de 60 % et ont un pH ajusté à 8,5.

Pour chaque sauce, on détermine alors sa viscosité Brookfield™ à 25°C et à 100 tours par minute selon la technique bien connue de l'homme du métier, de même que la valeur de sa rétention d'eau, déterminée selon le protocole décrit précédemment.

### Essai n° 16

Cet essai sert de référence et ne met pas en oeuvre d'additif polymérique

### Essai n° 17

Cet essai illustre l'invention et met en oeuvre 1 part en poids sec du copolymère selon les essais 14 et 15.

### Essai n° 18

Cet essai illustre l'invention et met en oeuvre 1 part en poids sec d'un copolymère constitué de, exprimé en % en poids de chacun de ses monomères :
a) 12,8 % d'acide acrylique,
b) 87,2 % d'un monomère de formule (I) dans lequel R est la fonction méthacrylate, R' désigne l'hydrogène, n = 48, m = 16,
de masse moléculaire moyenne en poids égale à 45 000 g/mol, et dont 100 % de ses sites carboxyliques sont neutralisés par l'ion sodium.

### Essai n° 19

Cet essai illustre l'invention et met en oeuvre 0,5 part en poids sec du copolymère selon les essais 14, 15 et 17, et 0,2 part en poids sec du copolymère selon l'essai n° 18.

### Essai n° 20

Cet essai illustre l'invention et met en oeuvre 1 part en poids sec du copolymère selon les essais 12 et 13.

Les valeurs de la viscosité Brookfield™ (Bk en mPa.s) et de la rétention d'eau (AA GWR en %) ont été reportées dans le tableau 2, de même que la quantité en parts en poids sec de l'additif polymérique testé (parts).

**Tableau 2**

| Essai n° | 16 | 17 | 18 | 19 | 20 |
|---|---|---|---|---|---|
| REFérence Art Antérieur INvention | REF | IN | IN | IN | IN |
| Parts | 0 | 1,0 | 1,0 | 0,5+0,2 | 1,0 |
| Bk (mPa.s) | 1520 | 900 | 900 | 730 | 950 |
| AA GWR (g/m²) | > 730 | 140 | 250 | 360 | 210 |

| | | | | | |
|---|---|---|---|---|---|
| > signifie que du carbonate de calcium a traversé le filtre, ce carbonate ayant été détecté par un test à l'acide | | | | | |

Seuls les polymères selon l'invention conduisent à des valeurs de rétention d'eau largement inférieures à celles obtenues pour la référence et l'art antérieur et ce, pour des valeurs de viscosité Brookfield™ tout à fait acceptables.

## Revendications

1. Procédé de fabrication d'une sauce de couchage destinée à un papier pour impression jet d'encre, comprenant les étapes constituant à :
1) mélanger une suspension aqueuse d'une charge minérale contenant un agent dispersant, avec au moins un liant,
2) introduire dans le milieu au moins un sel organique ou un sel minéral ou au moins un composé cationique, et
3) introduire dans le milieu au moins un polymère hydrosoluble constitué de, exprimé en % en poids de chacun de ses monomères :
a) 5 % à 40 %, préférentiellement 5 % à 20 % d'acide (méth)acrylique,
b) 60 % à 95 %, préférentiellement 80 % à 95 % d'au moins un monomère de formule (I) :
R - (OE)ₘ - (OP)ₙ - R' (I)
où R est une fonction polymérisable choisie parmi la fonction méthacrylate et méthacryluréthanne, OE et OP désignent respectivement les oxydes d'éthylène et de propylène, m et n sont 2 entiers dont l'un au moins est non nul et sont compris au sens large entre 0 et 100, R' désigne l'hydrogène ou un groupe alkyle ayant de 1 à 4 atomes de carbone,

2. Procédé selon la revendication 1, **caractérisé en ce que** le polymère hydrosoluble est totalement ou partiellement neutralisé.

3. Procédé selon une des revendications 1 ou 2, **caractérisé en ce que** le polymère hydrosoluble présente une masse moléculaire en poids comprise entre 10 000 g/mol et 10 000 000 g/mol.

4. Procédé selon les revendications 1 à 3, **caractérisé en ce que** le polymère hydrosoluble présente une masse moléculaire en poids qui varie entre 10 000 g/mol et 100 000 g/mol,

5. Procédé selon les revendications 1 à 3, **caractérisé en ce que** le polymère hydrosoluble présente une masse moléculaire en poids qui varie entre 1 000 000 g/mol et 10 000 000 g/mol.

6. Procédé selon une des revendications 1 à 5, **caractérisé en ce que** le sel minéral ou organique est le chlorure de calcium.

7. Procédé selon une des revendications 1 à 5, **caractérisé en ce que** le composé cationique est choisi parmi les polydadmac, polymadquat ou polyamine.

8. Procédé selon une des revendications 1 à 7, **caractérisé en ce que** la charge minérale est choisie parmi un carbonate de calcium naturel, synthétique ou modifié chimiquement

9. Procédé selon la revendication 8, **caractérisé en ce que** la charge minérale est un carbonate de calcium naturel.

10. Procédé selon une des revendications 1 à 9, **caractérisé en ce que** le dispersant est anionique ou cationique.

11. Utilisation d'au moins un polymère hydrosoluble, comme agent de stabilisation d'une sauce de couchage destinée à un papier pour impression jet d'encre, la dite sauce de couchage contenant de l'eau, au moins une charge minérale en suspension aqueuse en présence d'un agent dispersant, au moins un liant, au moins un sel minéral ou un sel organique ou un composé cationique, ledit au moins un polymère hydrosoluble étant constitué de, exprimé en % en poids de chacun de ses monomères :
a) 5 % à 40 %, préférentiellement 5 % à 20 % d'acide (méth)acrylique,
b) 60 % à 95 %, préférentiellement 80 % à 95 % d'au moins un monomère de formule (I) :
R - (OE)ₘ - (OP)ₙ - R' (I)
où R est une fonction polymérisable choisie parmi la fonction méthacrylate et méthacryluréthanne, OE et OP désignent respectivement les oxydes d'éthylène et de propylène, m et n sont 2 entiers dont l'un au moins est non nul et sont compris au sens large entre 0 et 100, R' désigne l'hydrogène ou un groupe alkyle ayant de 1 à 4 atomes de carbone.

12. Utilisation selon la revendication 11, **caractérisée en ce que** le polymère hydrosoluble est totalement ou partiellement neutralisé.

13. Utilisation selon une des revendications 11 ou 12, **caractérisée en ce que** le polymère hydrosoluble présente une masse moléculaire en poids comprise entre 10 000 g/mol et 10 000 000 g/mol.

14. Sauce de couchage destinée à un papier pour impression jet d'encre, contenant de l'eau, au moins une charge minérale en suspension aqueuse en présence d'un agent dispersant, au moins un liant, au moins un sel minéral ou un sel organique ou un composé cationique, et au moins un polymère hydrosoluble constitué de, exprimé en % en poids de chacun de ses monomères :
a) 5 % à 40 %, préférentiellement 5 % à 20 % d'acide (méth)acrylique,
b) 60 % à 95 %, préférentiellement 80 % à 95 % d'au moins un monomère de formule (I) :
R-(OE)ₘ-(OP)ₙ-R' (I)
où R est une fonction polymérisable choisie parmi la fonction méthacrylate et méthacryluréthanne, OE et OP désignent respectivement les oxydes d'éthylène et de propylène, m et n sont 2 entiers dont l'un au moins est non nul et sont compris au sens large entre 0 et 100, R' désigne l'hydrogène ou un groupe alkyle ayant de 1 à 4 atomes de carbone.

15. Sauce selon la revendication 14, **caractérisée en ce que** le polymère hydrosoluble présente une masse moléculaire en poids comprise entre 10 000 g/mol et 10 000 000 g/mol.

## Patentansprüche

1. Verfahren zur Herstellung einer Streichmasse für Tintenstrahldruckpapier, das folgende Schritte aufweist:
1) Mischen einer wässrigen Suspension eines mineralischen Füllstoffs, der ein Dispergiermittel enthält, mit mindestens einem Bindemittel,
2) Eintragen von mindestens einem organischen Salz oder einem anorganischen Salz oder mindestens einer kationischen Verbindung in das Medium, und
3) Eintragen von mindestens einem wasserlöslichen Polymer in das Medium, welches in Gewichtsprozent jedes seiner Monomere gebildet ist aus:
a) 5% bis 40%, vorzugsweise 5% bis 20% (Meth)Acrylsäure,
b) 60% bis 95%, vorzugsweise 80% bis 95% mindestens eines Monomers mit der Formel (I):
**R-(OE)ₘ-(OP)ₙ-R'** **(I)**
wobei R eine polymerisierbare Funktion ist, die aus der Methacrylat- und Methacrylurethan-Funktion ausgewählt wird, wobei OE und OP die Ethylen- beziehungsweise Propylenoxide bezeichnen, m und n 2 Ganzzahlen sind, von denen mindestens eine ungleich Null ist und die im weiteren Sinn zwischen 0 und 100 liegen, R' Wasserstoff oder eine Alkylgruppe bezeichnet, die zwischen 1 und 4 Kohlenstoffatome aufweist.

2. Verfahren nach Anspruch 1, **dadurch gekennzeichnet, dass** das wasserlösliche Polymer vollständig oder teilweise neutralisiert wird.

3. Verfahren nach einem der Ansprüche 1 oder 2, **dadurch gekennzeichnet, dass** das wasserlösliche Polymer ein gewichtsmäßiges Molekulargewicht zwischen 10 000 g/mol und 10 000 000 g/mol aufweist.

4. Verfahren nach einem der Ansprüche 1 bis 3, **dadurch gekennzeichnet, dass** das wasserlösliche Polymer ein gewichtsmäßiges Molekulargewicht aufweist, das zwischen 10 000 g/mol und 100 000 g/mol schwankt.

5. Verfahren nach einem der Ansprüche 1 bis 3, **dadurch gekennzeichnet, dass** das wasserlösliche Polymer ein gewichtsmäßiges Molekulargewicht aufweist, das zwischen 1 000 000 g/mol und 10 000 000 g/mol schwankt.

6. Verfahren nach einem der Ansprüche 1 bis 5, **dadurch gekennzeichnet, dass** das anorganische oder organische Salz Calciumchlorid ist.

7. Verfahren nach einem der Ansprüche 1 bis 5, **dadurch gekennzeichnet, dass** die kationische Verbindung aus Polydadmac, Polymadquat oder Polyamin ausgewählt wird.

8. Verfahren nach einem der Ansprüche 1 bis 7, **dadurch gekennzeichnet, dass** der mineralische Füllstoff aus einem natürlichen, einem synthetischen oder einem chemisch veränderten Calciumcarbonat ausgewählt wird.

9. Verfahren nach Anspruch 8, **dadurch gekennzeichnet, dass** der mineralische Füllstoff natürliches Calciumcarbonat ist.

10. Verfahren nach einem der Ansprüche 1 bis 9, **dadurch gekennzeichnet, dass** das Dispergiermittel anionisch oder kationisch ist.

11. Verwendung von mindestens einem wasserlöslichen Polymer als Stabilisierungsmittel einer Streichmasse für Tintenstrahldruckpapier, wobei die Streichmasse Wasser, mindestens einen mineralischen Füllstoff in wässriger Suspension in Gegenwart eines Dispergiermittels, mindestens ein Bindemittel, mindestens ein anorganisches Salz oder ein organisches Salz oder eine kationische Verbindung enthält, wobei das mindestens eine wasserlösliche Polymer in Gewichtsprozent jedes seiner Monomere gebildet ist aus:
a) 5% bis 40%, vorzugsweise 5% bis 20% (Meth)Acrylsäure,
b) 60% bis 95%, vorzugsweise 80% bis 95% mindestens eines Monomers mit der Formel (I):
**R-(OE)ₘ-(OP)ₙ-R'** **(I)**
wobei R eine polymerisierbare Funktion ist, die aus der Methacrylat- und Methacrylurethan-Funktion ausgewählt wird, OE und OP die Ethylenbeziehungsweise Propylenoxide bezeichnen, m und n 2 Ganzzahlen sind, von denen mindestens eine ungleich Null ist und die im weiteren Sinn zwischen 0 und 100 liegen, R' Wasserstoff oder eine Alkylgruppe bezeichnet, die zwischen 1 und 4 Kohlenstoffatome aufweist.

12. Verwendung nach Anspruch 11, **dadurch gekennzeichnet, dass** das wasserlösliche Polymer vollständig oder teilweise neutralisiert ist.

13. Verwendung nach einem der Ansprüche 11 oder 12, **dadurch gekennzeichnet, dass** das wasserlösliche Polymer ein gewichtsmäßiges Molekulargewicht zwischen 10 000 g/mol und 10 000 000 g/mol aufweist.

14. Streichmasse für Tintenstrahldruckpapier, das Wasser, mindestens einen mineralischen Füllstoff in wässriger Suspension in Gegenwart eines Dispergiermittels, mindestens ein Bindemittel, mindestens ein anorganisches Salz oder ein organisches Salz oder eine kationische Verbindung und mindestens ein wasserlösliches Polymer enthält, welches in Gewichtsprozent jedes seiner Monomere gebildet ist aus:
a) 5% bis 40%, vorzugsweise 5% bis 20% (Meth)Acrylsäure,
b) 60% bis 95%, vorzugsweise 80% bis 95% mindestens eines Monomers mit der Formel (I):
**R-(OE)ₘ-(OP)ₙ-R'** **(I)**
wobei R eine polymerisierbare Funktion ist, die aus der Methacrylat- und Methacrylurethan-Funktion ausgewählt wird, OE und OP die Ethylenbeziehungsweise Propylenoxide bezeichnen, m und n 2 Ganzzahlen sind, von denen mindestens eine ungleich Null ist und die im weiteren Sinn zwischen 0 und 100 liegen, R' Wasserstoff oder eine Alkylgruppe bezeichnet, die zwischen 1 und 4 Kohlenstoffatome aufweist.

15. Masse nach Anspruch 14, **dadurch gekennzeichnet, dass** das wasserlösliche Polymer ein gewichtsmäßiges Molekulargewicht zwischen 10 000 g/mol und 10 000 000 g/mol aufweist.

## Claims

1. A method of manufacture of a paper coating colour intended for inkjet printing paper, including the steps consisting in:
1) mixing an aqueous suspension of a mineral filler containing a dispersing agent with at least one binder,
2) introducing into the medium at least one organic salt or one mineral salt or at least one cationic compound, and
3) introducing into the medium at least one hydrosoluble polymer consisting, expressed as a % by weight of each of its monomers, of:
a) 5% to 40%, preferentially 5% to 20% of (meth)acrylic acid,
b) 60% to 95%, preferentially 80% to 95%, of at least one monomer of formula (I):
R-(EO)m-(PO)ₙ-R' (I)
where R is a polymerisable function chosen from among the methacrylate and methacrylurethanne function, EO and PO designate respectively ethylene and propylene oxides, m and n are 2 integers at least one of which is non-zero and are comprised between 0 and 100 inclusively, R' designates hydrogen or an alkyl group with from 1 to 4 carbon atoms,

2. A method according to claim 1, **characterised in that** the hydrosoluble polymer is totally or partially neutralised.

3. A method according to one of the claims 1 or 2, **characterised in that** the hydrosoluble polymer has a molecular mass by weight comprised between 10,000 g/mol and 10,000,000 g/mol.

4. A method according to claims 1 to 3, **characterised in that** the hydrosoluble polymer has a molecular mass by weight which varies between 10,000 g/mol and 100,000 g/mol.

5. A method according to claims 1 to 3, **characterised in that** the hydrosoluble polymer has a molecular mass by weight which varies between 1,000,000 g/mol and 10,000,000 g/mol.

6. A method according to one of the claims 1 to 5, **characterised in that** the mineral or organic salt is calcium chloride.

7. A method according to one of the claims 1 to 5, **characterised in that** the cationic compound is chosen from among the polyDADMACs, polyMADQUATs or polyamines.

8. A method according to one of the claims 1 to 7, **characterised in that** the mineral filler is chosen from among a natural, synthetic or chemically modified calcium carbonate.

9. A method according to claim 8, **characterised in that** the mineral filler is a natural calcium carbonate.

10. A method according to one of the claims 1 to 9, **characterised in that** the dispersing agent is either an anionic or cationic dispersing agent.

11. Use of at least one hydrosoluble polymer, as a stabilisation agent of a paper coating colour intended for inkjet printing paper, said paper coating colour containing water, at least one mineral filler in aqueous suspension in the presence of a dispersing agent, at least one binder, at least one mineral salt or one organic salt or one cationic compound, said at least one hydrosoluble polymer consisting, expressed as a % by weight of each of its monomers, of:
a) 5% to 40%, preferentially 5% to 20% of (meth)acrylic acid,
b) 60% to 95%, preferentially 80% to 95%, of at least one monomer of formula (I):
R-(EO)m-(PO)ₙ-R' (I)
where R is a polymerisable function chosen from among the methacrylate and methacrylurethanne function, EO and PO designate respectively ethylene and propylene oxides, m and n are 2 integers at least one of which is non-zero and are comprised between 0 and 100 inclusively, R' designates hydrogen or an alkyl group with from 1 to 4 carbon atoms.

12. Use according to claim 11, **characterised in that** the hydrosoluble polymer is totally or partially neutralised.

13. Use according to one of the claims 11 or 12, **characterised in that** the hydrosoluble polymer has a molecular mass by weight comprised between 10,000 g/mol and 10,000,000 g/mol.

14. A paper coating colour intended for inkjet printing paper, containing water, at least one mineral filler in aqueous suspension in the presence of a dispersing agent, at least one binder, at least one mineral salt or one organic salt or one cationic compound, and at least one hydrosoluble polymer consisting, expressed as a % by weight of each of its monomers, of:
a) 5% to 40%, preferentially 5% to 20% of (meth)acrylic acid,
b) 60% to 95%, preferentially 80% to 95%, of at least one monomer of formula (I):
R-(EO)ₘ-(PO)ₙ-R' (I)
where R is a polymerisable function chosen from among the methacrylate and methacrylurethanne function, EO and PO designate respectively ethylene and propylene oxides, m and n are 2 integers at least one of which is non-zero and are comprised between 0 and 100 inclusively, R' designates hydrogen or an alkyl group with from 1 to 4 carbon atoms.

15. A paper coating according to claim 14, **characterised in that** the hydrosoluble polymer has a molecular mass by weight comprised between 10,000 g/mol and 10,000,000 g/mol.
